# EUROPÄISCHE PATENTANMELDUNG

(11) **EP 1 361 771 A1**
(43) Veröffentlichungstag der Anmeldung: **12.11.2003**
(21) Anmeldenummer: 02010088.9
(22) Anmeldetag: 06.05.2002
(51) Int. Cl.: H04Q 7/38, G07F 7/10

(54) **Verfahren und Funkkommunikationssystem zur Übertragung von Nutzinformationen als Dienst an mehrere Teilnehmerstationen**

(71) Anmelder: SIEMENS AKTIENGESELLSCHAFT, 80333 München (DE)
(72) Erfinder: Hofmann, Jürgen, 86504 Merching (DE); Schniedenharn, Joerg, 13587 Berlin (DE); Wehmeier, Lars, 10115 Berlin (DE)

(57) **Zusammenfassung**

Die Erfindung betrifft ein Verfahren und ein Funkkommunikationssystem zur Übertragung von Nutzinformationen als Dienst an mehrere Teilnehmerstationen mit mindestens einer Funknetzwerkkontrolleinrichtung, mindestens einer Basisstation und mindestens einer Teilnehmerstation, wobei die Basisstation und die Teilnehmerstation über eine Funkkommunikations-Schnittstelle miteinander verbunden sind, wobei die Basistation und die Funknetzwerkkontrolleinrichtung Bestandteile eines Basisstationssubsystems sind und wobei die Funknetzwerkkontrolleinrichtung mit einer Zugangseinrichtung eines Kernnetzes verbunden ist. Erfindungsgemäß halten die Funknetzwerkkontrolleinrichtung und die Teilnehmerstation einen dienstspezifischen Schlüssel vor, der die Nutzungsberechtigung zu dem Dienst umfasst. Der dienstspezifische Schlüssel ist bevorzugt für mehrere Teilnehmerstationen) gültig, d.h. er ist nicht teilnehmerspezifisch.

## Beschreibung

Die Erfindung betrifft ein Verfahren zur Übertragung von Nutzinformationen in einem Funkkommunikationssystem mit mindestens einer Funknetzwerkkontrolleinrichtung, mindestens einer Basisstation und mindestens einer Teilnehmerstation nach dem Oberbegriff des Anspruchs 1.

Die Erfindung betrifft ferner ein Funkkommunikationssystem nach dem Oberbegriff des Anspruchs 9.

Kommunikationssysteme gewinnen zunehmend an Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing.

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen der mindestens einen Basisstation und der mindestens einen Teilnehmerstation erfolgt über eine Funkkommunikations-Schnittstelle. Die mindestens eine Basisstation und Funknetzwerkkontrolleinrichtung sind Bestandteile eines Basisstationssubsystems (RNS Radio Network Subsystem). Ein Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems mit einer Zugangseinrichtung des Kernnetzes verbunden.

Neben individuellen Nutzinformationen werden in Funkkommunikationssystemen Daten übertragen, die mehreren Benutzern zur Verfügung gestellt werden. Beispielsweise umfassen solche Nutzinformationen Video streams. Nutzinformationen, welche mehreren Teilnehmern zur Verfügung gestellt werden, werden unter dem Begriff MBMS (Multimedia Broadcast/Multicast Service) zusammengefasst.

Grundsätzlich ist von großer Bedeutung, mit jeglichen Netzwerkressourcen so sparsam wie möglich umzugehen. Man ist besonders bestrebt, dass das Funknetzwerk so wenig Informationen wie möglich über die jeweiligen Teilnehmer benötigt, da ansonsten potentiell eine signifikante Menge im Funknetzwerk gespeichert werden muss.

Es sind daher Funkkommunikationssysteme mit Anbindung an ein Kernnetz bekannt, wobei folgende Netzwerknoten wichtige Funktionen für die Übertragung der genannten Dienste aufweisen:
- die Zugangseinrichtung zum Kernnetz (SGSN Serving GPRS Support Node), welche sowohl dienstspezifische als auch teilnehmerspezifische Informationen hält,
- die Funknetzwerkkontrolleinrichtung (RNC Radio Network Controller), welche dienstspezifische Informationen hält.

Der Erfindung liegt daher die Aufgabe zu Grunde, ein Verfahren und ein Funkkommunikationssystem der eingangs genannten Art aufzuzeigen, welche einen sparsamen Umgang mit den Netzwerkressourcen mit sich bringen. Insbesondere sollte im Funkkommunikationssystem beurteilt werden können, ob eine bestimmte Teilnehmerstation zu einem Service zugelassen werden kann, ohne dass die Teilnehmerstation selbst bekannt ist. Ferner sollte ein Zellwechsel möglichst einfach erfolgen können.

Die Aufgabe wird für das Verfahren mit den Merkmalen des Anspruchs 1 und für die Funkkommunikation mit den Merkmalen des Anspruchs 9 gelöst.

Vorteilhafte Ausgestaltung und Weiterbildungen sind Gegenstand der abhängigen Ansprüche.

Erfindungsgemäß halten die Funknetzwerkkontrolleinrichtungen und die Teilnehmerstation einen dienstspezifischen Schlüssel vor, der die Nutzungsberechtigung zu dem Dienst umfasst.

Mit der Verwendung des Schlüssels kann im Funknetzwerk eine Zugangs- bzw. Nutzungsberechtigung zu einem Dienst für mehrere Teilnehmer geprüft werden, ohne dass das Funknetzwerk teilnehmerspezifische Informationen im Hinblick auf den Dienst benötigt. Bevorzugt wird daher ein dienstspezifischer Schlüssel verwendet, welcher für mehrere Teilnehmerstationen gültig ist und nicht teilspezifisch ausgewählt ist.

Mit Vorteil überträgt die Zugangseinrichtung des Kernnetzes beim Start des Dienstes sowohl der Funknetzwerkkontrolleinrichtung als auch der Teilnehmerstation den dienstspezifischen Schlüssel. Auf diese Weise kann der Signalisierungsaufwand bei sicherer Übertragung der Zugangsberechtigung an die Einrichtungen des Funknetzwerks gering gehalten werden.

In Ausgestaltung der Erfindung wird der dienstspezifische Schlüssel über einen teilnehmerspezifischen Funkkanal von der Basisstation an die Teilnehmerstation übertragen. Auf diese Weise kann sicher gestellt werden, dass der Schlüssel der Teilnehmerstation über eine sichere Verbindung übermittelt wird und keine unbefugten Teilnehmerstationen den Dienst unberechtigter Weise nutzen können.

Die Erfindung ermöglicht, dass bei einem Zellwechsel innerhalb des Funknetzwerks die Zugangsberechtigung der Teilnehmerstation überprüft werden kann, ohne dass eine Interaktion mit der Zugangseinrichtung zum Kernnetz durchgeführt werden müsste. Denn bei einem Zellwechsel in eine Funkzelle, welche derselben Funknetzwerkkontrolleinrichtung zugeordnet ist, ist der Funknetzwerkkontrolleinrichtung die Zugangsberechtigung der Teilnehmerstation bereits bekannt. Im Fall dass die Teilnehmerstationen in eine andere Funkzelle, welche eine weitere Funknetzwerkkontrolleinrichtung zugeordnet ist wechselt, kann sich die Teilnehmerstation bei der weiteren Funknetzwerkkontrolleinrichtung unter Verwendung des dienstspezifischen Schlüssels anmelden. Auf diese Weise ist sichergestellt, dass bei jedem Zellwechsel eine Interaktion mit der Zugangseinrichtung des Kernnetzes vermieden werden kann. Der dienstspezifische Schlüssel kann von der Teilnehmerstation bei der Anmeldung bei der weiteren Funknetzwerkkontrolleinrichtung der neuen Funkzelle bspw. für die Verschlüsselung der Nachricht, durch Benutzung des Schlüssels für eine Integrity Protection, durch Anwendung des Schlüssels auf die Adresse der Teilnehmerstation oder ähnliche Mechanismen Verwendung finden. Da der Funknetzkontrolleinrichtung der benutzte Schlüssel bekannt ist, kann die Funknetzwerkkontrolleinrichtung beurteilen, ob die jeweilige Teilnehmerstation sich ordnungsgemäß sich zum Start des Dienstes bei der Zugangseinrichtung des Kernnetzes angemeldet hatte.

In Weiterbildung der Erfindung wird der dienstspezifische Schlüssel als Kontext eines über das Kernnetz angebotene Dienstes in der mindestens einen Funknetzwerkkontrolleinrichtung bzw. in den Funknetzwerkkontrolleinrichtungen vorgehalten werden, die diesen Dienst unterstützen.

Bevorzugt handelt es sich bei dem Dienst um einen Multimedia-Dienst (z.B. Video Streams).

Der dienstspezifische Schlüssel kann ein temporärer oder ein fixer Schlüssel sein. Die Auswahl der Art des Schlüssels kann sich dabei beispielsweise an Sicherheitsaspekten orientieren.

Beim erfindungsgemäßen Funkkommunikationssystem sind in der Funknetzwerkkontrolleinrichtung und in der Teilnehmerstation Mittel vorhanden, um einen dienstspezifischen Schlüssel vorzuhalten, der die Nutzungsberechtigung zu dem Dienst umfasst.

Die Zugangseinrichtung des Kernnetzes kann Mittel aufweisen, beim Start des Dienstes sowohl der Funknetzwerkkontrolleinrichtung als auch der Teilnehmerstation den dienstspezifischen Schlüssel zu übermitteln.

Mit Vorteil sind im erfindungsgemäßen Funkkommunikationssystem Mittel zum Übertragen des dienstspezifischen Schlüssels von der Basisstation an die Teilnehmerstation über einen teilnehmerspezifischen Funkkanal vorgesehen.

Das beschriebene Funkkommunikationssystem eignet sich insbesondere zur Durchführung des erfindungsgemäßen Verfahrens.

Nachfolgend soll die Erfindung anhand einer Figur näher erläutert werden.

Hierbei zeigt:

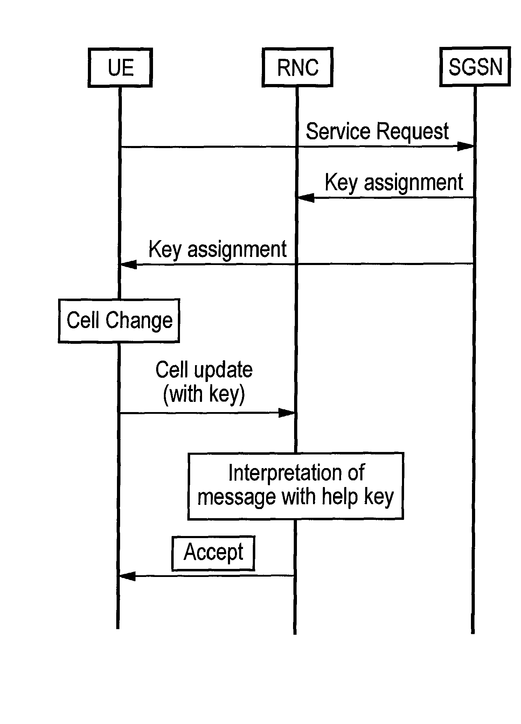

- Fig. 1:: Die Signalisierung zwischen Teilnehmerstation, Funknetzwerkkontrolleinrichtung und Zugangseinrichtung des Kernnetzes.

In Fig. 1 sind die Signalisierungen im Hinblick auf die Nutzung eines Dienstes durch eine beispielhaft ausgewählte Teilnehmerstation (UE User Equipment) dargestellt. Zunächst die Teilnehmerstation (UE) den Dienst bei der Zugangseinrichtung des Kernnetzes (SGSN Serving GPRS Support Node) an. Anschließend überträgt die Zugangseinrichtung des Kernnetzes (SGSN) den Schlüssel zur Funknetzwerkkontrolleinrichtung (RNC Radio Network Controller). Außerdem überträgt die Zugangseinrichtung des Kernnetzes (SGSN) den Schlüssel zur Teilnehmerstation (UE). Die Teilnehmerstation kann anschließend die Nutzinformationen - ebenso wie andere Teilnehmerstationen auch - empfangen (Key assignment).

Im Falle eines Zellwechsels (Cell change) erfolgt die Aktualisierung der Funkzelle durch Zellaktualisierung (Cell update), wobei die Teilnehmerstation auch den dienstspezifischen Schlüssel (with key) an die Funknetzwerkkontrolleinrichtung (RNC) übermittelt. Bei der Funknetzwerkkontrolleinrichtung (RNC) erfolgt eine Interpretation unter Zuhilfenahme des dienstspezifischen Schlüssels (Interpretation of message with help key). Von der Funknetzwerkkontrolleinrichtung (RNC) erfolgt die Bestätigung der Zugangsberechtigung zu dem Dienst für mehrere Teilnehmer durch Übermittlung einer Nachricht ("Accept").

An diesem Beispiel ist deutlich erkennbar, dass mit der Verwendung des Schlüssels im Funknetzwerk eine Zugangs- bzw. Nutzungsberechtigung zu einem Dienst für die Teilnehmerstation (UE) geprüft werden kann, ohne dass das Funknetzwerk teilnehmerspezifische Informationen im Hinblick auf den Dienst benötigt. Der Signalisierungsaufwand ist dabei gering gehalten.

## Patentansprüche

1. Verfahren zur Übertragung von Nutzinformationen in einem Funkkommunikationssystem mit mindestens einer Funknetzwerkkontrolleinrichtung, mindestens einer Basisstation und mindestens einer Teilnehmerstation,
wobei die mindestens eine Basisstation und die mindestens eine Teilnehmerstation über eine Funkkommunikations-Schnittstelle miteinander verbunden sind,
wobei die Nutzinformationen als Dienst mehreren Teilnehmern zur Verfügung gestellt werden,
wobei die mindestens eine Basistation und die Funknetzwerkkontrolleinrichtung Bestandteile eines Basisstationssubsystems sind,
wobei die Funknetzwerkkontrolleinrichtung mit einer Zugangseinrichtung eines Kernnetzes verbunden ist,
**dadurch gekennzeichnet,**
**dass** die Funknetzwerkkontrolleinrichtung und die Teilnehmerstation einen dienstspezifischen Schlüssel vorhalten, der die Nutzungsberechtigung zu dem Dienst umfasst.

2. Verfahren nach Anspruch 1,
**dadurch gekennzeichnet,**
**dass** der dienstspezifische Schlüssel für mehrere Teilnehmerstationen (nicht teilnehmerspezifisch) gültig ist.

3. Verfahren nach Anspruch 1 oder 2,
**dadurch gekennzeichnet,**
**dass** die Zugangseinrichtung des Kernnetzes beim Start des Dienstes sowohl der Funknetzwerkkontrolleinrichtung als auch der Teilnehmerstation den dienstspezifischen Schlüssel übermittelt.

4. Verfahren nach Anspruch 3,
**dadurch gekennzeichnet,**
**dass** der dienstspezifische Schlüssel über einen teilnehmerspezifischen Funkkanal von der Basisstation an die Teilnehmerstation übertragen wird.

5. Verfahren nach einem der Ansprüche 1 bis 4,
**dadurch gekennzeichnet,**
**dass** sich bei einem Zellwechsel in eine andere Funkzelle, welche einer weiteren Funknetzwerkkontrolleinrichtung zugeordnet ist, die Teilnehmerstation bei der weiteren Funknetzwerkkontrolleinrichtung unter Verwendung des dienstspezifische Schlüssels anmeldet.

6. Verfahren nach einem der Ansprüche 1 bis 5,
**dadurch gekennzeichnet,**
**dass** der dienstspezifische Schlüssel als Kontext eines über das Kernnetz angebotenen Dienstes in den Funknetzwerkkontrolleinrichtungen vorgehalten wird, die diesen Dienst unterstützen.

7. Verfahren nach einem der Ansprüche 1 bis 6,
**dadurch gekennzeichnet,**
**dass** der Dienst ein Multimedia-Dienst ist.

8. Verfahren nach einem der Ansprüche 1 bis 7,
**dadurch gekennzeichnet,**
**dass** der dienstspezifische Schlüssel ein temporärer oder fixer Schlüssel ist.

9. Funkkommunikationssystem zur Übertragung von Nutzinformationen als Dienst an mehrere Teilnehmerstationen umfassend mindestens eine Funknetzwerkkontrolleinrichtung, mindestens eine Basisstation und mindestens eine Teilnehmerstation,
wobei die mindestens eine Basisstation und die mindestens eine Teilnehmerstation über eine Funkkommunikations-Schnittstelle miteinander verbunden sind,
wobei die mindestens eine Basistation und die Funknetzwerkkontrolleinrichtung Bestandteile eines Basisstationssubsystems sind,
wobei die Funknetzwerkkontrolleinrichtung mit einer Zugangseinrichtung eines Kernnetzes verbunden ist,
**dadurch gekennzeichnet,**
**dass** in der Funknetzwerkkontrolleinrichtung und in der Teilnehmerstation Mittel vorhanden sind, um einen dienstspezifischen Schlüssel vorzuhalten, der die Nutzungsberechtigung zu dem Dienst umfasst.

10. Funkkommunikationssystem nach Anspruch 8,
**dadurch gekennzeichnet,**
**dass** die Zugangseinrichtung des Kernnetzes Mittel aufweist, beim Start des Dienstes sowohl der Funknetzwerkkontrolleinrichtung als auch der Teilnehmerstation den dienstspezifischen Schlüssel zu übermitteln.

11. Funkkommunikationssystem nach Anspruch 9,
**dadurch gekennzeichnet,**
**dass** Mittel zum Übertragen des dienstspezifischen Schlüssels von der Basisstation an die Teilnehmerstation über einen teilnehmerspezifischen Funkkanal vorgesehen sind.
